**Europäisches Patentamt**

**European Patent Office**

**Office européen des brevets**

(19)

(11) Veröffentlichungsnummer : **0 407 702 B1**

# (12) EUROPÄISCHE PATENTSCHRIFT

(45) Veröffentlichungstag der Patentschrift :
**23.11.94 Patentblatt 94/47**

(51) Int. Cl.$^5$ : **G01S 7/48**

(21) Anmeldenummer : **90108861.7**

(22) Anmeldetag : **11.05.90**

(54) **Täuschvorrichtung für Laser-Entfernungsmesser.**

(30) Priorität : **08.07.89 DE 3922572**

(43) Veröffentlichungstag der Anmeldung :
**16.01.91 Patentblatt 91/03**

(45) Bekanntmachung des Hinweises auf die
Patenterteilung :
**23.11.94 Patentblatt 94/47**

(84) Benannte Vertragsstaaten :
**DE FR GB IT**

(56) Entgegenhaltungen :
**WO-A-87/04265**
**DE-A- 2 408 058**
**DE-A- 3 609 834**

(73) Patentinhaber : **Deutsche Aerospace AG**
**D-81663 München (DE)**

(72) Erfinder : **Poisel, Hans, Dr.**
**Neustädter Strasse 6**
**D-8060 Dachau (DE)**
Erfinder : **Seiffarth, Ernst A.**
**Edelweissstrasse 116**
**D-8028 Taufkrichen (DE)**
Erfinder : **Trommer, Gert, Dr.**
**Connollystrasse 16**
**D-8000 München 40 (DE)**

## Beschreibung

Die Erfindung bezieht sich auf eine Täuschvorrichtung für Laser-Entfernungsmesser gemäß dem Gattungsbegriff des Anspruchs 1.

Solche Täuschvorrichtungen sind an sich in den verschiedensten Ausführungsformen bekannt. Sie basieren sowohl auf passiven als auch auf aktiven Täuschverfahren. Der Nachteil der passiven Ausführungsformen mit Spiegel ist, daß die Energie der Rückstrahlung zu gering ist, was auf die Kleinheit der Querschnittsfläche der Eintrittoptik im Verhältnis zur gesamten Fläche des angestrahlten Objekts zurückzuführen ist. Die bekannten aktiven Ausführungsformen mit Laser erfordern bisher einen relativ hohen Aufwand, da für jede mögliche Wellenlänge der eintreffenden Strahlung ein eigener Laser entsprechend gleicher Wellenlänge verwendet werden muß.

Aus der DE-A 24 08 058 ist ein Störverfahren eines zur Tieffliegerbekämpfung bodenseitig vorgesehenen, mit einem Feuerleitradar kombinierten Laserentfernungsmesser bekannt, bei dem der Intervall zwischen dem ersten und zweiten Bodenlaserimpuls ermittelt wird und einen Störimpuls bei einem Bordlaser auslöst, der verzögert beim Empfang des dritten Impulses des Bodenlasers in dessen Richtung zeitverzögert abgestrahlt wird. Diese Ausführungsform benötigt einen sehr hohen optischen und elektronischen Aufwand, da sowohl der Lasersender als auch der ihm eigens zugeordnete Laserwarnempfänger mit einer eigenen Optik versehen werden müssen, weiterhin Verstärker, Frequenzmesser, Verzögerungslogik und Sondersteuerungen etc. benötigt werden.

Aus der DE-A 36 09 834 ist eine Ausführungsform bekannt, bei der die als Lasermeßstrahlung empfangene und zu störende Strahlung zeitverzögert als Störstrahlung abgestrahlt wird. Hierzu wird ein am angestrahlten Objekt befindlicher Laser-Sender mit der verzögerten Empfangsstrahlung getriggert, wobei die Verzögerung durch einen Lichtleiter gewünschter Länge erreicht wird, oder es werden unabhängig von dem Empfang einer zu störenden Laserstrahlung laufend unkorrelierte Laser-Störimpulse in alle Raumrichtungen ausgesendet. Auch hier ist der optische und elektronische Aufwand ganz erheblich, abgesehen von den eingangs schon angeführten Nachteilen für die bisher bekannten passiven und aktiven Lösungen.

Der vorliegenden Erfindung liegt die Aufgabe zugrunde, eine Täuschvorrichtung der eingangs genannten Art zu schaffen, die nicht nur den optischen und elektronischen Aufwand wesentlich reduziert, sondern auch in Leistung und Intensität wesentlich verbessert ist.

Diese Aufgabe wird durch die im Anspruch 1 aufgezeigten Maßnahmen gelöst. In den Unteransprüchen sind Weiterbildungen und Ausgestaltungen angegeben und in der nachfolgenden Beschreibung ist ein Ausführungsbeispiel erläutert und skizziert.

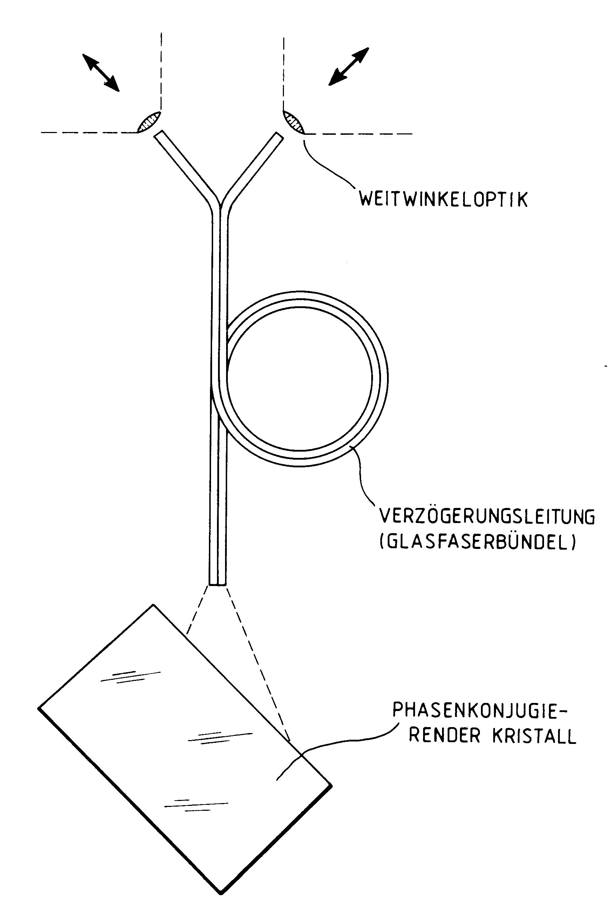

Die einzige Figur zeigt ein Schemabild eines Ausführungsbeispiels der Täuschvorrichtung in vereinfachter Darstellung.

In der Figur ist ein Ausführungsbeispiel der vorgeschlagenen Täuschvorrichtung skizziert. Sie setzt sich aus einer Kombination von Weitwinkeloptik, Faserverzögerungsleitung und phasenkonjugierendem Element zusammen. Solche Elemente sind als Spiegel an sich bekannt, nur hat bisher der Stand der Technik nicht erkannt, daß solche Spiegel sich optimal für Täuschvorrichtungen der eingangs genannten Art einsetzen lassen, denn durch die Verwendung des phasenkonjugierten Spiegels anstelle der bisher verwendeten Reflexionseinrichtungen wird erreicht, daß die auf die Weitwinkeloptik auftreffende Strahlung aus einem weiten Sichtbereich trotz der Weitwinkelcharakteristik der Eingangs-/Ausgangsoptik gebündelt vollständig auf den Sender zurückgeworfen wird. Die bisherigen Einrichtungen, die mit normalen Spiegeln arbeiten, benötigen einen Satz zahlreicher, einen großen Raumwinkel abdeckender Optiken mit einem schmalen Gesichtsfeld, um möglichst gebündelt zurückstrahlen zu können.

Wie skizziert ist, wird Ober eine Weitwinkel-Einkoppeloptik einem Lichtwellenleiter das Licht des zu störenden Laserentfernungsmessers zugeführt. Nach dem Durchlaufen einer bestimmten Länge des Lichtwellenleiters trifft das Licht auf einen Reflektor am zu schützenden Objekt. Bisher war dies in der Regel ein einfacher Spiegel, jedoch wird die reflektierte Leistung, die nach nochmaligem Durchlaufen - also dem Rücklauf der Länge des Lichtwellenleiters LWL wieder aus diesem austritt und über den gesamten Öffnungswinkel der Weitwinkeloptik emittiert, nur noch in ganz erheblich geringem Maß am Sendeort ankommen. Um diesen Leistungsverlust zu minimieren werden bisher zusätzliche Verstärkereinrichtungen verwendet.

Der austretende Strahl ist aufgrund des Durchlaufs durch den Lichtwellenleiter zwangsläufig gegenüber dem direkt reflektierten Strahl bzw. Signal zeitlich verzögert und zwar um:

$$\Delta T = 2 \cdot L\,(LWL) \cdot n / c_o$$

hierbei ist

$n$ = Brechungsindex der verwendeten Faser,

$c_o$ = Lichtgeschwindigkeit im Vakuum.

Um nun das Problem der geringen am Empfänger ankommenden Leistung zu beheben, ist nunmehr erkannt worden, daß hier ein phasenkonjugierender Spiegel eingesetzt werden kann. Sehr gute Erfolge bringt ein Spiegel, der als $BaTiO_3$-Kristall ausgebildet ist. Weiterhin ist erkannt worden, daß dieser Kristall sowohl im fremdals auch im selbstgepumpten Mode betrieben werden kann. Durch die Eigenschaft des phasenkonjugierenden Elements, den optischen Lichtweg exakt umzukehren, wird der rücklaufende - reflektierte - Strahl so geformt, daß er exakt wieder am Ausgangspunkt ankommt.

Dadurch daß praktisch die gesamte auf die Eingangsoptik der Verzögerungsleitung bzw. -einrichtung auftreffende Strahlung gebündelt auf den aussendenden Entfernungsmesser zurückgestrahlt wird, während die auf den Rest des Objektes treffende nicht zeitverzögerte Strahlung als Kugelwelle stark abgeschwächt auf den Entfernungsmesser zurückkommt, hat die verzögerte Strahlung trotz der geringeren Querschnittsfläche der Empfangs-/Sendeoptik eine wesentlich höhere Intensität, die das schwächere Licht des normalen Reflexes weit überstrahlt und somit unwirksam macht.

## Patentansprüche

1. Täuschvorrichtung für Laser-Entfernungsmesser womit dem Sender vom angestrahlten Objekt ein gleichartiges jedoch zeitverzögertes Signal übersandt und damit eine falsche Entfernungsanzeige vermittelt wird, **dadurch gekennzeichnet,** daß die Täuschvorrichtung aus einer Kombination von Weitwinkeloptik, Faserverzögerungsleitung und phasenkonjugie-rendem Element gebildet wird.

2. Vorrichtung nach Anspruch 1, **dadurch gekennzeichnet**, daß die Weitwinkeloptik aus einem Bündel weniger Glasfasern hoher numerischer Apertur ohne Linsen gebildet wird.

3. Vorrichtung nach Anspruch 1, **dadurch gekennzeichnet**, daß die Weitwinkeloptik aus einem Bündel Glasfasern mit rundgeschliffenen Stirnflächen besteht.

4. Vorrichtung nach einem oder mehreren der Ansprüche 1 bis 4, **dadurch gekennzeichnet**, daß der Kristall des phasenkonjugierenden Elements im fremd- oder selbstgepumpten Mode betrieben wird.

## Claims

1. A deception device for laser rangefinders, which transmits from the target object to the emitter an identical but temporally delayed signal, thus offering a false range indication, **characterised in that** the deception device comprises a combination of wide-angle optic, delaying optical fibre and a phase-conjugating element.

2. A device according to claim 1, **characterised in that** the wide-angle optic comprises a bundle of a few glass fibres of high numerical aperture without lenses.

3. A device according to claim 1, **characterised in that** the wide-angle optic comprises a bundle of glass fibres with round ground end surfaces.

4. A device according to one of more of claims 1 to 4, **characterised in that** the crystal of the phase-conjugating element is operated in external or self-pumped mode.

## Revendications

1. Dispositif de leurre pour télémètres à laser au moyen duquel, à partir de l'objet illuminé, on envoie à l'émetteur un signal de même nature mais retardé et on fournit ainsi une indication de distance erronée, caractérisé par le fait que le dispositif de leurre est constitué d'une combinaison d'une optique à grand angle, de lignes de retard à fibres optiques et d'un élément de combinaison de phases.

2. Dispositif selon la revendication 1, caractérisé par le fait que l'optique à grand angle est constituée d'un faisceau comprenant un petit nombre de fibres en verre à nombre d'ouverture élevé, sans lentilles.

3. Dispositif selon la revendication 1, caractérisé par le fait que l'optique à grand angle est constituée d'un faisceau de fibres en verre dont les faces frontales sont polies bombées.

4. Dispositif selon une ou plusieurs des revendications 1 à 4, caractérisé par le fait que le cristal de l'élément de combinaison de phases travaille en mode de pompage extérieur ou en mode de pompage propre.

WEITWINKELOPTIK

VERZÖGERUNGSLEITUNG
(GLASFASERBÜNDEL)

PHASENKONJUGIE-
RENDER KRISTALL